# EUROPÄISCHE PATENTSCHRIFT

(11) **EP 3 266 576 B1**
(45) Veröffentlichungstag und Bekanntmachung des Hinweises auf die Patenterteilung: **10.07.2019**
(21) Anmeldenummer: 17170526.2
(22) Anmeldetag: 11.05.2017
(51) Int. Cl.: B29B 7/28, B29B 7/18, B29B 7/74, B29C 48/36, B29C 48/92

(54) **VERFAHREN ZUR HERSTELLUNG EINER GUMMIMISCHUNG FÜR FAHRZEUGREIFEN**
METHOD FOR PRODUCING A RUBBER MIXTURE FOR TIRES
PROCÉDÉ POUR LA FABRICATION D'UN MÉLANGE DE CAOUTCHOUC POUR PNEUMATIQUES DE VÉHICULE

(30) Priorität: 05.07.2016 DE 102016212177
(43) Veröffentlichungstag der Anmeldung: 10.01.2018
(73) Patentinhaber: Continental Reifen Deutschland GmbH, 30165 Hannover (DE)
(72) Erfinder: Steiner, Frank Stefan, 30167 Hannover (DE); Wortmann, Christopher, 30851 Langenhagen (DE)
(74) Vertreter: Widjaja, Wira

(56) Entgegenhaltungen:
- EP-A1- 2 143 538
- DE-A1- 4 127 211
- JP-A- H06 179 212
- US-A- 3 447 201
- US-A- 4 818 113
- US-A- 5 865 535
- US-A1- 2004 085 851

## Beschreibung

Die Erfindung betrifft ein Verfahren zur Herstellung einer Gummimischung.

Bei der Herstellung von Gummimischungen für Fahrzeugreifen ist es bekannt Tandemmischer einzusetzen. Der Tandemmischer wird verwendet um Mischungen insgesamt effizienter als in einem Einzelmischer herzustellen.

Im unteren Mischer erfolgt i.a. die Herstellung der Fertigmischung bei einer geringeren Temperatur als im oberen Mischer.

Es ist bekannt, die Temperatur des Mischgutes im Innenmischer als Regelgröße für die Steuerung der Drehzahlen für die rotierenden Mischwerkzeuge zu verwenden. Bei dieser Art der Regelung kann es dennoch dazu kommen, dass das Mischgut aufgrund unterschiedlicher Wirkungen nicht effizient durchmischt wird.

Ein Mischprozess mit einem Innenmischer, dessen Drehzahl zumindest mittels drei Regelgrößen gesteuert wird, ist beispielweise in US 4 818 113 A beschrieben. Ein geregeltes Mischverfahren zur Herstellung von Gummimischungen für eine Reifenproduktion wird in US 2004/085851 A1 vorgeschlagen. Die EP 2 143 538 A1 beschreibt weiterhin einen Innenmischer zum Mischen von Polymeren in Abhängigkeit von gemessenen Drehmomenten. Ein Mischer mit Drehmomentsensoren zum Schutz vor Überlastungen der Antriebswellen wird in JP H06 179212 A vorgeschlagen. Ein Tandemmischer mit einem Innenmischer zum Herstellen von Kautschukmischungen ist aus der DE 41 27 211 A1 bekannt.

Der Erfindung liegt die Aufgabe zugrunde, ein Verfahren zu schaffen, mit dem der Herstellungsprozess zur Herstellung einer Gummimischung optimiert wird.

Gelöst wird die Aufgabe mit einem Verfahren gemäss Anspruch 1 zur Herstellung einer Gummimischung zur Herstellung von Fahrzeugreifen mit folgenden Schritten:
a) Hinzugabe von Mischungsbestandteilen für die Gummimischung in einen Innenmischer (6) mit rotierenden Mischwerkzeugen (7, 8),
b) Durchführung einer Durchmischung der Mischungsbestandteile mit den rotierenden Mischwerkzeugen (7, 8), wobei mit den Mischwerkzeugen (7, 8) ein Energieeintrag in das Mischgut erfolgt und alle Mischungsbestandteile durchmischt werden,
c) Messung des Drehmomentes an mindestens einer der Antriebswellen (3, 4) für die rotierenden Mischwerkzeuge (7, 8), wobei die Drehmomentmessung an der Antriebswelle (3, 4) im Bereich der Kupplung (5) zwischen dem Getriebe (2) und dem Innenmischer (6) erfolgt,
d) Vergleichen des gemessenen Ist-Drehmomentes mit einem vorgegebenen Ziel-Drehmoment,
e) Anpassung der Drehzahlen für die rotierenden Mischwerkzeuge (7, 8), wenn das gemessene Ist-Drehmoment für einen definierte Zeitspanne das vorgegebene Ziel-Drehmoment um einen vorgegebenen Prozentsatz unterschreitet oder überschreitet, wobei eine Anpassung der Drehzahlen für die rotierenden Mischwerkzeuge (7, 8) erfolgt, wenn das gemessene Ist-Drehmoment das vorgegebenen Ziel-Drehmoment für eine Zeitspanne von mindestens 5 Sekunden um mindestens 10 % unterschreitet oder überschreitet,
f) Regelung der Drehzahlen für die rotierenden Mischwerkzeuge (7, 8) in Abhängigkeit des gemessenen Drehmomentverlaufes,
g) Beenden des Mischprozesses, wenn alle Mischungsbestandteile im Innenmischer (6) in einer vorgegebenen Qualität durchmischt sind,
h) Entnahme der Gummimischung aus dem Innenmischer (6) und Weiterbearbeitung der Gummimischung.

Bevorzugte Ausführungen werden in den abhängigen Ansprüchen umfasst.

Ein Vorteil der Erfindung ist insbesondere darin zu sehen, dass durch das Verfahren der Herstellungsprozess zur Herstellung einer Gummimischung optimiert wird.

Durch das neue Verfahren wird die Gesamtzykluszeit zur Herstellung von Gummimischungen wesentlich reduziert.

Durch die Messung des Drehmomentes an mindestens einer Antriebswelle für die rotierenden Mischwerkzeuge kann eine optimale Regelung für den Innenmischer erfolgen. Die Messung des Drehmomentes wird genutzt, um eine Phase des ineffizienten Mischens zu identifizieren. Diese Phasen können dadurch entstehen, dass bestimmte Chemikalien eine schmierende Wirkung haben, wodurch kein Energieeintrag in das Mischgut erfolgen kann. Bei einem zu geringen Energieeintrag erfolgt ein automatischer Eingriff in die Drehzahlsteuerung des Innenmischers, um die Mischzeit insgesamt zu verkürzen. Wenn das mischungsspezifische Zieldrehmoment um einen bestimmten Wert unterschritten oder überschritten wird, erfolgt eine Anpassung der Drehzahl für die rotierenden Mischwerkzeuge des Innenmischers. Auf diese Weise kann ein im Wesentlichen konstanter Energieeintrag für das Mischgut gewährleistet werden, wodurch ebenfalls die Mischzeit insgesamt optimiert wird.

Erfindungsgemäß ist vorgesehen, dass die Drehmomentmessung an der Antriebswelle im Bereich der Kupplung zwischen dem Getriebe und dem Innenmischer erfolgt.

Dadurch kann das Drehmoment an der Antriebswelle auf einfache Weise und mit einer hohen Genauigkeit gemessen werden.

In einer vorteilhaften Ausführung der Erfindung ist vorgesehen, dass die Drehmomentmessung an der Antriebswelle mit einem Dehnungsmessstreifen-Sensor erfolgt.

Derartige Drehmomentsensoren lassen sich auf einfache Weise an den Antriebswellen anordnen.

Des Weiteren ist erfindungsgemäß vorgesehen, dass bei Schritt e) eine Anpassung der Drehzahlen für die rotierenden Mischwerkzeuge erfolgt,
wenn das gemessene Ist-Drehmoment das vorgegebenen Ziel-Drehmoment um mindestens 10 % unterschreitet oder überschreitet.

Auf diese Weise wird gewährleistet, dass ein schneller Regeleingriff erfolgt, wenn eine Phase eines ineffizienten Mischens identifiziert wird.

Erfindungsgemäß ist vorgesehen, dass bei Schritt e) eine Anpassung der Drehzahlen für die rotierenden Mischwerkzeuge erfolgt,
wenn das gemessene Ist-Drehmoment das vorgegebenen Ziel-Drehmoment für eine Zeitspanne von mindestens 5 Sekunden unterschreitet oder überschreitet.

Dadurch wird gewährleistet, dass kein verfrühter Eingriff in die Drehzahlsteuerung für die rotierenden Mischwerkzeuge erfolgt.

In einer weiteren vorteilhaften Ausführung der Erfindung ist vorgesehen, dass der Innenmischer die Untermaschine eines Tandemmischers ist.

Bei der Untermaschine eines Tandemmischers ist die Optimierung der Zykluszeit besonders wichtig.

In einer weiteren vorteilhaften Ausführung der Erfindung ist vorgesehen, dass bei Schritt a) eine Zugabe von temperaturempfindlichen Chemikalien mit einer schmierenden Wirkung erfolgt.

Die temperaturempfindlichen Chemikalien können eine schmierende Wirkung entfalten, die den Energieeintrag mit den rotierenden Mischwerkzeugen beeinträchtigen kann.

In einer weiteren vorteilhaften Ausführung der Erfindung ist vorgesehen, dass im Innenmischer eine kontinuierliche Temperaturmessung erfolgt,
wobei bei Schritt f) die gemessene Temperatur im Mischgut als weiterer Regelparameter eingesetzt wird.

Dadurch kann die Drehzahlregelung für die rotierenden Mischwerkzeuge besser an eine optimierte Zykluszeit angepasst werden.

In einer weiteren vorteilhaften Ausführung der Erfindung ist vorgesehen, dass die Regelung mittels einer PID-Regelung und/oder basierend auf einem gleitenden Mittelwert erfolgt.

Eine PID-Regelung ist aus der Regelungstechnik bekannt und bietet den Vorteil einer stabilen Regelung.

Anhand eines Ausführungsbeispiels soll die Erfindung näher erläutert werden.

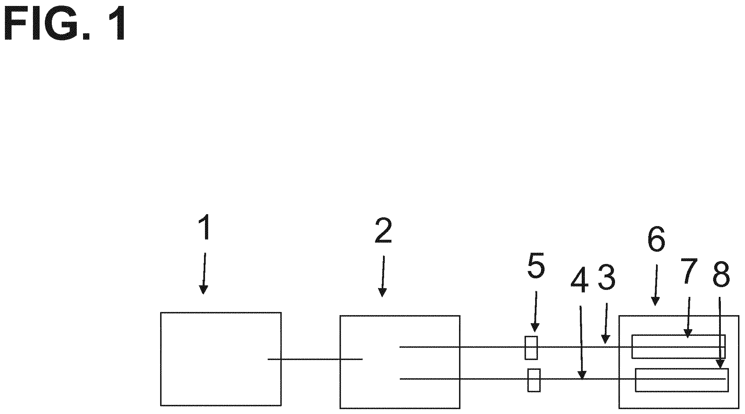

Die Figur 1 zeigt eine Prinzipskizze der Untermaschine des Tandemmischers. Die Rohmaterialien der Gummimischung werden zunächst dem nicht dargestellten oberen Mischer zugeführt. Nach der ersten Mischstufe wird die Gummimischung in die Untermaschine 6 überführt.

Bei der Untermaschine 6 handelt es sich um einen Innenmischer mit zwei rotierenden Mischwerkzeugen 7 und 8. Mit den rotierenden Mischwerkzeugen 7 und 8 erfolgt der Energieeintrag in das Mischgut. Beide Mischwerkzeuge 7 und 8 werden jeweils durch eine erste Antriebswelle 3 und eine zweite Antriebswelle 4 angetrieben. Die Drehmomentmessung erfolgt an den beiden Antriebswellen 3 und 4 im Bereich der Kupplungen 5, die zwischen dem Getriebe 2 und dem Innenmischer 6 angeordnet sind. Die Drehmomentmessung erfolgt mit Dehnungsmessstreifensensoren, die insbesondere direkt auf die Antriebswellen aufgeklebt werden. Links neben dem Getriebe 2 ist ein Antrieb 1 angeordnet. Über das Getriebe 2 und den Antrieb 1 erfolgt eine Drehzahlregelung der angebundenen Antriebswellen 3 und 4. Über die Messung des Drehmomentes lässt sich z.B. feststellen, ob das Ist-Drehmoment kleiner geworden ist und nicht mehr dem vorgegebenen Zieldrehmoment entspricht. Sobald das gemessene Ist-Drehmoment um mindestens 10% kleiner ist als das vorgegebene Ziel-Drehmoment, erfolgt ein automatisierter Eingriff in die Drehzahlsteuerung der rotierenden Mischwerkzeuge. In diesem Fall würde die Drehzahl für die rotierenden Mischwerkzeuge angehoben werden, um wieder einen konstanten Energieeintrag in das Mischgut zu erhalten. Dadurch erfolgt insbesondere eine schnellere Einarbeitung der schmierenden Chemikalien in das Mischgut im Innenmischer.

Für den Fall, dass das gemessene Ist-Drehmoment zu hoch ist, erfolgt eine Absenkung der Drehzahl. Die Messung des Drehmomentes kann entweder an einer der beiden Antriebswellen 3 oder 4 oder an beiden Antriebswellen 3 und 4 erfolgen. Wenn eine Divergenz bei der Messung des Drehmomentes an beiden Antriebswellen 3 und 4 festgestellt wird, kann diese Messgröße ebenfalls als Regelparameter für die Drehzahlsteuerung genutzt werden. Durch den Einsatz der Drehzahlregelung kann eine erhebliche Durchsatzsteigerung für den Innenmischer erzielt werden.

Außerdem wird die Prozessstabilität für das Mischverfahren verbessert.

### Bezugszeichenliste

- 1.: Antrieb
- 2.: Getriebe
- 3.: erste Antriebswelle
- 4.: zweite Antriebswelle
- 5.: Kupplung
- 6.: Innenmischer, insb. Untermaschine eines Tandemmischers
- 7.: rotierende Mischwerkzeuge an der ersten Antriebswelle
- 8.: rotierende Mischwerkzeuge an der zweiten Antriebswelle

## Patentansprüche

1. Verfahren zur Herstellung einer Gummimischung zur Herstellung von Fahrzeugreifen mit folgenden Schritten:
a) Hinzugabe von Mischungsbestandteilen für die Gummimischung in einen Innenmischer (6) mit rotierenden Mischwerkzeugen (7, 8),
b) Durchführung einer Durchmischung der Mischungsbestandteile mit den rotierenden Mischwerkzeugen (7, 8),
wobei mit den Mischwerkzeugen (7, 8) ein Energieeintrag in das Mischgut erfolgt und alle Mischungsbestandteile durchmischt werden,
c) Messung des Drehmomentes an mindestens einer der Antriebswellen (3, 4) für die rotierenden Mischwerkzeuge (7, 8),
wobei die Drehmomentmessung an der Antriebswelle (3, 4) im Bereich der Kupplung (5) zwischen dem Getriebe (2) und dem Innenmischer (6) erfolgt,
d) Vergleichen des gemessenen Ist-Drehmomentes mit einem vorgegebenen Ziel-Drehmoment,
e) Anpassung der Drehzahlen für die rotierenden Mischwerkzeuge (7, 8),
wenn das gemessene Ist-Drehmoment für einen definierte Zeitspanne das vorgegebene Ziel-Drehmoment um einen vorgegebenen Prozentsatz unterschreitet oder überschreitet, wobei eine Anpassung der Drehzahlen für die rotierenden Mischwerkzeuge (7, 8) erfolgt,
wenn das gemessene Ist-Drehmoment das vorgegebenen Ziel-Drehmoment für eine Zeitspanne von mindestens 5 Sekunden um mindestens 10 % unterschreitet oder überschreitet,
f) Regelung der Drehzahlen für die rotierenden Mischwerkzeuge (7, 8) in Abhängigkeit des gemessenen Drehmomentverlaufes,
g) Beenden des Mischprozesses, wenn alle Mischungsbestandteile im Innenmischer (6) in einer vorgegebenen Qualität durchmischt sind,
h) Entnahme der Gummimischung aus dem Innenmischer (6) und Weiterbearbeitung der Gummimischung.

2. Verfahren nach Anspruch 1,
**dadurch gekennzeichnet, dass**
die Drehmomentmessung an der Antriebswelle (3, 4) mit einem Dehnungsmessstreifen-Sensor erfolgt.

3. Verfahren nach einem der vorhergehenden Ansprüche,
**dadurch gekennzeichnet, dass**
der Innenmischer (6) die Untermaschine eines Tandemmischers ist.

4. Verfahren nach einem der vorhergehenden Ansprüche,
**dadurch gekennzeichnet, dass**
bei Schritt a) eine Zugabe von temperaturempfindlichen Chemikalien mit einer schmierenden Wirkung erfolgt.

5. Verfahren nach einem der vorhergehenden Ansprüche,
**dadurch gekennzeichnet, dass**
im Innenmischer (6) eine kontinuierliche Temperaturmessung erfolgt,
wobei bei Schritt f) die gemessene Temperatur im Mischgut als weiterer Regelparameter eingesetzt wird.

6. Verfahren nach einem der vorhergehenden Ansprüche,
**dadurch gekennzeichnet, dass**
bei Schritt f) bei einem Feststellen einer Divergenz bei der Messung des Drehmoments an beiden Antriebswellen (3, 4), diese Messgröße als weiterer Regelparameter eingesetzt wird.

## Claims

1. Method for producing a rubber compound for producing vehicle tyres, comprising the following steps:
a) adding compound ingredients for the rubber compound into an internal mixer (6) with rotating mixing tools (7, 8),
b) carrying out a thorough mixing of the compound ingredients with the rotating mixing tools (7, 8), wherein, with the mixing tools (7, 8), an energy input into the mixed material takes place and all of the compound ingredients are thoroughly mixed,
c) measuring the torque on at least one of the drive shafts (3, 4) for the rotating mixing tools (7, 8), wherein the torque measurement on the drive shaft (3, 4) is performed in the region of the coupling (5) between the gear mechanism (2) and the internal mixer (6),
d) comparing the measured actual torque with a prescribed target torque,
e) adapting the speeds for the rotating mixing tools (7, 8) if the measured actual torque goes below or above the prescribed target torque by a prescribed percentage for a defined time period, wherein an adaptation of the speeds for the rotating mixing tools (7, 8) takes place
if the measured actual torque goes below or above the prescribed target torque by at least 10% for a time period of at least 5 seconds,
f) controlling the speeds for the rotating mixing tools (7, 8) in dependence on the measured torque profile,
g) ending the mixing process when all of the compound ingredients have been thoroughly mixed in the internal mixer (6) to a prescribed quality,
h) removing the rubber compound from the internal mixer (6) and further processing the rubber compound.

2. Method according to Claim 1,
**characterized in that**
the torque measurement on the drive shaft (3, 4) is performed with a strain gauge sensor.

3. Method according to one of the preceding claims,
**characterized in that**
the internal mixer (6) is the lower machine of a tandem mixer.

4. Method according to one of the preceding claims,
**characterized in that**
in step a) an addition of temperature-sensitive chemicals with a lubricating effect takes place.

5. Method according to one of the preceding claims,
**characterized in that**
a continuous temperature measurement is performed in the internal mixer (6), wherein in step f) the measured temperature in the mixed material is used as a further control parameter.

6. Method according to one of the preceding claims,
**characterized in that**
in step f), if a divergence is established in the measurement of the torque on the two drive shafts (3, 4), this measured variable is used as a further control parameter.

## Revendications

1. Procédé de préparation d'un mélange caoutchouteux destiné à la fabrication de pneumatiques de véhicule, le procédé comprenant les étapes suivantes :
a) ajouter des composants de mélange destinés au mélange caoutchouteux dans un mélangeur interne (6) équipé d'outils de mélange rotatifs (7, 8),
b) mélanger soigneusement les composants de mélange avec les outils de mélange rotatifs (7, 8),
un apport d'énergie dans le produit de mélange étant effectué avec les outils de mélange (7, 8) et tous les composants de mélange étant soigneusement mélangés,
c) mesurer le couple sur l'un au moins des arbres d'entraînement (3, 4) des outils de mélange rotatifs (7, 8),
la mesure de couple sur l'arbre d'entraînement (3, 4) étant effectuée dans la région de l'accouplement (5) entre la transmission (2) et le mélangeur interne (6),
d) comparer le couple réel mesuré à un couple cible prédéterminé,
e) adapter les vitesses de rotation des outils de mélange rotatifs (7, 8) si le couple réel mesuré devient inférieur ou supérieur au couple cible prédéterminé d'un pourcentage prédéterminé pendant un intervalle de temps défini, une adaptation des vitesses de rotation des outils de mélange rotatifs (7, 8) étant effectuée si le couple réel mesuré devient inférieur ou supérieur au couple cible prédéterminé d'au moins 10 % pendant un intervalle de temps d'au moins 5 secondes,
f) réguler les vitesses de rotation des outils de mélange rotatifs (7, 8) en fonction de la variation de couple mesurée,
g) mettre fin au processus de mélange lorsque tous les composants de mélange dans le mélangeur interne (6) sont soigneusement mélangés avec une qualité prédéterminée,
h) enlever le mélange caoutchouteux du mélangeur interne (6) et effectuer un traitement ultérieur du mélange caoutchouteux.

2. Procédé selon la revendication 1, **caractérisé en ce que**
la mesure du couple sur l'arbre d'entraînement (3, 4) est effectuée avec un capteur à jauge d'allongement.

3. Procédé selon l'une des revendications précédentes, **caractérisé en ce que**
le mélangeur interne (6) est la sous-machine d'un mélangeur tandem.

4. Procédé selon l'une des revendications précédentes, **caractérisé en ce que**
un ajout de produits chimiques sensibles à la température et ayant un effet lubrifiant étant effectué à l'étape a).

5. Procédé selon l'une des revendications précédentes, **caractérisé en ce que**
une mesure de température continue est effectuée dans le mélangeur interne (6), la température mesurée dans le produit de mélange étant utilisée à l'étape f) comme paramètre de régulation supplémentaire.

6. Procédé selon l'une des revendications précédentes, **caractérisé en ce que**
à l'étape f), lors de la détermination d'une divergence dans la mesure du couple au niveau des deux arbres d'entraînement (3, 4), cette grandeur de mesure est utilisée comme paramètre de régulation supplémentaire.
